# EUROPÄISCHE PATENTSCHRIFT

(11) **EP 3 516 462 B1**
(45) Veröffentlichungstag und Bekanntmachung des Hinweises auf die Patenterteilung: **30.12.2020**
(21) Anmeldenummer: 17816403.4
(22) Anmeldetag: 23.09.2017
(51) Int. Cl.: G08C 17/02, G05B 15/02, G05B 1/00, G08C 13/00, H04L 12/28

(54) **RAUMSTEUERUNGSSYSTEM**
ROOM CONTROL SYSTEM
SYSTÈME DE COMMANDE DE PIÈCE

(30) Priorität: 23.09.2016 DE 102016118059; 21.09.2017 DE 102017121969
(43) Veröffentlichungstag der Anmeldung: 31.07.2019
(73) Patentinhaber: Rutzke, Marco, 09337 Hohenstein-Ernstthal (DE)
(72) Erfinder: Rutzke, Marco, 09337 Hohenstein-Ernstthal (DE)
(74) Vertreter: Weissfloh, Ingo
(86) Internationale Anmeldenummer: PCT/DE2017/100812
(87) Internationale Veröffentlichungsnummer: WO 2018/054428

(56) Entgegenhaltungen:
- EP-A2- 2 492 875
- DE-B3-102014 201 468
- US-A1- 2012 031 984
- US-B1- 6 640 142

## Beschreibung

Die Erfindung betrifft ein System zur Steuerung verschiedener technischer Einrichtungen zur Realisierung unterschiedlicher Funktionen in einem Raum als Raum-im-Raum. Raumsteuerungssysteme sind in unterschiedlichen Ausführungen bekannt. So ist bekannt, dem Raum zuzuordnende technische Einrichtungen, wie insbesondere Heizungs- und Klimaanlagen, Waschmaschinen, Herde sowie Kommunikationstechnik mittels einer Verbindung zu einem Netzwerk über Smartphones oder externe Computer anzusteuern. Bekannt sind Raum-im-Raum-Systeme. Sie betreffen einen abgegrenzten räumlichen Bereich innerhalb bestehender Räume. Bekannt sind Raum-im-Raum-Systeme als frei stehende, in sich abgeschlossene und unabhängige Raumeinheiten in großen Räumen.

Problematisch hierbei ist, dass diese Raum-im-Raum-Systeme zwar zur Verfügung stehen, jedoch regelmäßig unklar ob, wann und von wem der Raum-im-Raum genutzt wird oder genutzt werden darf und jeweils für welchen Zeitraum die Nutzung möglich ist. Zudem sind derartige Raum-im-Raum-Systeme nicht dynamisch. Die Patentschrift US 6 640 142 B1 beschreibt ein Steuerungssystem für einen Raum-im-Raum aber keine Zugangsfunktion und kein Buchungssystem. Die Patentschrift DE 10 2014 201468 B3 offenbart ein Steuergerät zur Steuerung von Komfortgrößen eines Raumes, wobei erst ein Freischaltcode auf ein im Raum befindliches mobiles Gerät zu übertragen ist. Ein Freischaltcode berechtigt einen Nutzer zur Ansteuerung der Komfortgrößen des Raums für einen bestimmten Zeitraum. Nutzer müssen ein Freischaltcode anfordern. DE 10 2014 201468 B3 offenbart keinen Raum-im-Raum mit Zugangsfunktionen. Die Patentanmeldung EP 2 492 875 A2 offenbart die Zugangskontrolle zu Räumen mittels mobiler Endgeräte, aber kein Buchungssystem und keinen Zeitplan und schon gar nicht zur Zugangskontrolle eines Raumes-im-Raum. Die Patentanmeldung US 2012/031984 A1 offenbart die Erfassung und Anpassung von örtlichen Gegebenheiten in verschiedenen Räumen eines Gebäudes wie die Heizung, Lüftung und Klimatisierung, um diese Gegebenheiten an Nutzer anzupassen. Hierbei werden die Nutzer innerhalb eines Gebäudes geortet, so dass für jede Person die Temperatur, Luftfeuchtigkeit und andere Parameter am Standort der Person erfasst und angepasst werden können. US 2012/031984 A1 offenbart aber kein Buchungssystem, das mit einer Zugangsfunktion für einen Raum-im-Raum korrespondiert.

Aufgabe der Erfindung ist es daher, ein komplexes und multifunktional betreibbares Raumsteuerungssystem für einen Raum-im-Raum bereitzustellen.

Die Erfindung betrifft ein Raumsteuerungssystem zum Betreiben eines Raumes-im-Raum. Hierbei erfolgt eine Steuerung dem abgegrenzten Raum zugeordneter und insbesondere im Raum angeordneter technischer Einrichtungen sowie das Bereitstellen nutzerbezogener Daten. Das Raumsteuerungssystem soll mit Hilfe der ansteuerbaren technischen Einrichtungen unterschiedliche Servicefunktionen realisieren. Das Raumsteuerungssystem soll es ermöglichen, die Vorgaben für die Servicefunktionen nutzerfreundlich einzugeben und darauf einzugehen. Weiterhin soll das Raumsteuerungssystem durch die Nutzer zeitlich programmierbar sein. Die Funktionen des Raumsteuerungssystems sollen für die Nutzer kontrollierbar sein.

Sofern bis hierher und im Folgenden von einem Raum die Rede ist, betrifft dies jeweils einen Raum-im-Raum als abgegrenzten räumlichen Bereich innerhalb bestehender Räume. Erfindungsgemäß wird die Aufgabe durch ein Raumsteuerungssystem mit den Merkmalen des Hauptanspruchs gelöst.

Die Erfindung dient dazu, mit Hilfe der ansteuerbaren technischen Einrichtungen unterschiedliche Servicefunktionen für den Raum-im-Raum zu realisieren.

Das Raumsteuerungssystem umfasst Eingabeeinheiten und Anzeigeeinheiten, die mit einem Datenverarbeitungssystem, das eine Serverfunktionalität besitzt, zusammenwirken. Das Datenverarbeitungssystem verarbeitet als Server oder Serversystem die eingegebenen Daten, wie beispielsweise Sollwerte und deren zeitliche Zuordnungen und steuert gemäß diesen Vorgaben die entsprechenden technischen Einrichtungen an. Die technischen Einrichtungen realisieren die jeweiligen Servicefunktionen. Das Datenverarbeitungssystem und Server, Server oder Serversystem sind insofern begrifflich und funktionell gleichzusetzen, da unabhängig von der Benennung ein Datenverarbeitungssystem oder ein Server oder ein Serversystem, jeweils die komplexe Aufgabe der Raumsteuerung gleichermaßen zu erfüllen, geeignet ist.

Die Eingabeeinheiten sind vorzugsweise dazu vorgesehen und ausgebildet, die Einstellung beziehungsweise Programmierung verschiedener Servicefunktionen zu ermöglichen und Vorgaben (Sollwerte), mit zeitlicher Zuordnung sowie andere Daten bezüglich im Raum verfügbarer Servicefunktionen einzugeben. Ebenso können die Eingabeeinheiten dazu ausgebildet sein, beispielsweise die Bedienung der die jeweilige Servicefunktion beeinflussenden Geräte oder die Bedienung von Geräten, welche die möglichen Servicefunktionen ausführen, und Programmierung des Datenverarbeitungssystems zu ermöglichen oder Daten oder Informationen, welche beispielsweise während der Nutzung anzuzeigen sind, einzugeben.

Die Eingabeeinheiten sind beispielsweise Schalter, Tastaturen oder andere Eingabegeräte für Computer, berührungsempfindliche Oberflächen oder Bildschirme, Kamerasysteme, Mikrofonsysteme oder optische sowie elektronische Lesergeräte und/oder mobile oder stationäre Kommunikationsgeräte.

Die Dateneingabe kann beispielsweise mittels Schalterbetätigung, Tastatur, Gestensteuerung, Touchscreen oder Touchpad sowie durch Datenübertragung von einem elektronischen und mobilen oder ortsfestem Endgerät, wie einem Smartphone, Tablet-PC, Notebook oder einem PC erfolgen. Als Eingabeeinheiten können somit auch komplexe Schalteinheiten dienen. Ebenso können Kamerasysteme oder elektronische Lesegeräte als Eingabeeinheiten Verwendung finden.

Die Anzeigeeinheiten sind insbesondere dazu vorgesehen und ausgebildet, die mittels Eingabeeinheiten eingegebenen Daten, Zustandswerte bezüglich der technischen Einrichtungen und des Datenverarbeitungssystems sowie Zustandswerte bezüglich des Raumes-im-Raum und/oder der Servicefunktionen anzuzeigen. Die Anzeigeeinheiten dienen damit insbesondere der Kontrolle unterschiedlicher Funktionen des Raumsteuerungssystem.

Anzeigeeinheiten können insbesondere Displays aber auch einfache Leuchtanzeigen sein.

Als Anzeigeeinheiten kommen weiterhin beispielsweise Bildschirme oder Anzeigefelder und/oder mobile oder stationäre Kommunikationsgeräte sind, die innerhalb und/oder außerhalb des Raumes-im-Raum.

Eingabeeinheiten und Anzeigeeinheiten sind vorzugsweise in einem Gerät kombiniert. Kombinierte Eingabe- und Anzeigeeinheiten können vorzugsweise Computer, insbesondere tragbare Computer wie Tablets oder Smartphones sein. Die jeweiligen Bildschirme fungieren dann als Anzeigeeinheit. Die Bildschirme fungieren jedoch zugleich als Eingabeeinheit, wenn diese berührungsempfindlich sind und darüber direkte Eingaben oder Eingaben Bildschirmtastaturen ermöglichen.
Die Eingabeeinheiten und Anzeigeeinheiten sind über Datennetzwerke mit dem Datenverarbeitungssystem logisch verbunden. Das Datenverarbeitungssystem umfasst als Hardware zumindest einen in einem Netzwerk (LAN und/oder Internet) eingebundenen, beispielsweise redundanten Server auf dem eine entsprechende Steuerung als Software aktiv ist. Zweckmäßigerweise ist das Datenverarbeitungssystem mit dem Internet verbunden oder zumindest in einem lokalen oder privaten Netzwerk angeordnet.

Das Datenverarbeitungssystem kann beispielsweise dediziert, also als virtueller Server oder beispielsweise mit eigener Hardware vorgesehen und ausgeführt sein oder beispielsweise als Serverdienst als Bestandteil eines anderen Servers, beispielsweise eines vorhanden Unternehmensserver für Nutzerdaten und anderen Diensten vorgesehen und ausgeführt sein.

Gemäß den über die Eingabeeinheit eingegebenen Vorgaben steuert das Datenverarbeitungssystem die entsprechenden technischen Einrichtungen und gegebenenfalls Stellglieder an, die somit die Vorgaben für zugehörige Servicefunktionen im Raum realisieren.

Die technischen Einrichtungen umfassen dazu eine Schnittstelle zum Datenverarbeitungssystem und gegebenenfalls eine integrierte Steuerung oder Regelung.

Zur Realisierung der Funktionalität sind die Eingabeeinheiten, Anzeigeeinheiten und technischen Einrichtungen sowie Stellglieder zur Datenübertragung mit dem entsprechend konfigurierten Datenverarbeitungssystem und gegebenenfalls untereinander verbunden. Damit ist ein Datenaustausch entsprechend der Konfiguration des Datenverarbeitungssystems in der Weise möglich, dass Nutzereingaben zu einer gewünschten Ansteuerung der technischen Einrichtungen und Stellglieder und somit zur Realisierung der gewünschten Servicefunktionen führen. Konfigurationen des Datenverarbeitungssystems sind entsprechende Systemprogramme, wobei diese Programme sowohl vorgegeben als auch editierbar sein können.

Mit der Erfindung wird der Zugriff auf unterschiedliche mit dem Raum-im-Raum im Zusammenhang stehende technische Einrichtungen durch ein zentrales Datenverarbeitungssystem möglich, wobei die Eingabe von relevanten Daten mittels mehrerer unterschiedlicher mit dem Datenverarbeitungssystem kommunizierender Eingabeeinheiten realisierbar ist. Somit können zentral gesteuert unterschiedliche Servicefunktionen im Raum beziehungsweise für den Raum nutzerfreundlich realisiert werden.

Durch die Erfindung wird somit ein komplexes und multifunktional betreibbares Raumsteuerungssystem für einen Raum-im-Raum bereitgestellt.

Einer vorteilhaften Ausgestaltung der Erfindung entsprechend können die Servicefunktionen Raumfunktionen, Zugangsfunktionen sowie für den Raum-im-Raum oder im Raum-im-Raum verfügbare Dienstfunktionen sein.

Raumfunktionen betreffen insbesondere die Beheizung, Belüftung, Klimatisierung, Beleuchtung und Verschattung des Raumes. Die technischen Einrichtungen, die die Raumfunktionen realisieren, wie Heizsysteme, Klimasysteme, Lüftungssysteme, Beleuchtungssysteme beziehungsweise Sichtschutzsysteme werden im Weiteren als raumtechnische Einrichtungen bezeichnet.

Durch an sich bekannte Heizsysteme, Klimasysteme und Lüftungssysteme mit oder ohne integrierter Ist-Werteerfassung können entsprechend den Nutzerbedürfnissen die für den durch den Nutzer über die Eingabeeinheit vorgebbaren Nutzungszeitraum gewünschten Werte, wie Temperatur oder Luftfeuchtigkeit realisiert werden.

Analog können die gewünschten Licht- und Sichtverhältnisse durch Beleuchtungssysteme beziehungsweise Sichtschutzsysteme, wie schaltbare Folien, beziehungsweise Verdunklungssysteme, wie Rollos realisiert werden.

In gleicher Weise können für die Zugangsfunktionen des Raumes-im-Raum und im Raum-im-Raum verfügbare technische Einrichtungen, im Weiteren als zugangstechnische Einrichtungen bezeichnet, über das Raumsteuerungssystem angesteuert werden. Zugangsfunktionen sind alle Funktionen, die den legitimierten Zugang zum Raum und den entsprechenden technischen Einrichtungen ermöglichen.

Die entsprechenden zugangstechnischen Einrichtungen für die Zugangsfunktionen werden insbesondere durch Schließsysteme sowie Berechtigungssysteme oder entsprechende Eingabeeinheiten zur Nutzeridentifikation umgesetzt. Die zugangstechnische Einrichtungen zur Realisierung der Zugangsfunktionen für den Zugang zum Raum-im-Raum sind insbesondere durch entsprechend ausgebildete und mit einer Schnittstelle zum Datenverarbeitungssystem versehene Schließsysteme wie vorzugsweise entsprechende Schlösser.

Das Schließsystem ermöglicht somit den Zugang beziehungsweise die Verwehrung des Zugangs zum jeweiligen Raum-im-Raum. Ein entsprechendes Schließsystem kann beispielsweise für einen gebuchten Zeitraum den Zugang über die Eingabe eines Codes in die entsprechende Eingabeeinheit freigeben. Die Nutzeridentifikation kann auch durch die Erfassung biometrischer Daten oder auslesbarer Codes erfolgen. Entsprechend der Nutzeridentifikation werden die den Zugang zum Raum steuernden Zugangsfunktionen freigegeben.

Weitere Zugangsfunktionen betreffen die Freischaltung beziehungsweise Sperrung von im Raum vorhandenen technischen Einrichtungen, beispielsweise bürotechnische Einrichtungen für die jeweiligen potentiellen Nutzer. Mittels des Berechtigungssystems wird die Freischaltung der bürotechnischen Einrichtungen realisiert. Über das Datenverarbeitungssystem steuert das Berechtigungssystem als bürotechnische Einrichtungen insbesondere Computersysteme, Videosysteme, Audiosysteme und Kommunikationssysteme. Dabei kann das Berechtigungssystem Teil des Datenverarbeitungssystems sein.

Die Zugangsfunktionen korrespondieren gegebenenfalls mit einem durch das Datenverarbeitungssystem realisierten Buchungssystem.

Das Berechtigungssystem kann somit beispielsweise durch ein über ein im Datenverarbeitungssystem hinterlegtes Nutzerprofil die Berechtigung für die Nutzung verfügbarer Dienstfunktionen zur Nutzung und/oder Bedienung bestimmter Geräte, wie Computer, Projektoren, Bildschirme aber auch anderer im Raum vorhandener Maschinen und Geräte, regeln.

Als Dienstfunktionen werden Funktionen bezeichnet, die dem Nutzer durch im Raum verfügbare technische Einrichtungen als bürotechnische Einrichtungen oder bürotechnische Geräte wie Computer, Projektoren, Großdisplays, Audiosysteme, Kommunikationssysteme oder Maschinen, wie beispielsweise Drucker oder computergesteuerte Werkzeugmaschinen, zur Verfügung gestellt werden. Damit können über die Eingabeeinheiten eingegebene oder eingespielte Daten durch die entsprechenden bürotechnische Einrichtungen verarbeitet und/oder wiedergegeben beziehungsweise anderweitig verwendet werden.

Die Computersysteme, Videosysteme, Audiosysteme und Kommunikationssysteme stellen somit Dienstfunktionen bereit, um den Nutzern einen Service im Raum zu bieten. Somit können diese Geräte durch die Eingabeeinheiten im Vorfeld einer geplanten Nutzung oder während dessen angesteuert werden. Damit kann beispielsweise auch eine Videokonferenz oder ein bebilderter Vortrag mit einem nicht körperlich anwesenden Referenten realisiert werden. Ebenso können bürotechnische Einrichtungen oder bürotechnische Geräte wie Projektoren, Großdisplay, Lautsprecher oder vorhandene Maschinen über einen mitgebrachten tragbaren Computer durch die bereitgestellte Datenkommunikation von den Nutzern verwendet werden. Zudem lassen sich benutzerbezogene Daten, beispielsweise seine an einem Arbeitsplatz hinterlegten Daten oder Nutzerprofile im Raum-im-Raum bereitstellen und nutzen.

Eine weitere mögliche Dienstfunktion ist die Bereitstellung von Verbrauchsmaterialen am oder im Raum-im-Raum. Hierbei kann es sich um Getränke oder Snacks sowie um Büromaterialien wie Stifte, Papier oder andere entsprechende Gegenstände handeln. Diese können einerseits in abschließbaren und über das Buchungssystem oder Berechtigungssystem sowie über die Zugangsfunktion freischaltbaren Schränken, Kühlschränken oder Materialschränken vorgehalten werden. Zudem kann dabei vorgesehen werden, dass die Verbrauchsmaterialen bei Entnahme erfasst werden, so dass einerseits rechtzeitig ein Auffüllen und anderseits eine Abrechnung erfolgen kann. Diese Abrechnung kann dabei unmittelbar oder über das Buchungssystem erfolgen. Die Erfassung der entnommenen Materialen oder Gegenstände kann über Sensoren oder Kameras erfolgen, welche die Gegenstände oder aufgebrachte oder angebrachte Codierungen erfassen und an das Buchungssystem und/oder das Raumsteuerungssystem übermitteln.

Die beispielsweise in Betracht kommenden Schalter, Tastaturen oder andere Eingabegeräte für Computer, berührungsempfindliche Oberflächen oder Bildschirme, Kamerasysteme, Mikrofonsysteme oder optische sowie elektronische Lesergeräte und/oder mobile oder stationäre Kommunikationsgeräte sind gemäß einer vorteilhaften Ausgestaltung der Erfindung innerhalb und/oder außerhalb des Raumes-im-Raum angeordnet und/oder über drahtlose oder drahtgebundene Datenverbindungen unmittelbar oder mittelbar mit dem Datenverarbeitungssystem verbunden.

Schalter schließen hierbei Drehknöpfe, Wippschalter, Scrollbälle sowie berührungssensitive Flächen und weitere bekannte Eingabeelemente sowie eine zweckmäßige Anordnung unterschiedlicher Eingabeelemente zueinander in einer Eingabeeinheit ein.

Tastaturen und Touchscreens kommen insbesondere als Teil mobiler Kommunikationsgeräte wie Smartphones, Tablets und tragbare Computer zum Einsatz. Eingabeeinheiten können ebenso durch eine Gestensteuerung, die mit einem Kamerasystem erfasst wird, oder Sprachsteuerung, die mit einem Mikrofonsystem erfasst wird, realisiert sein. Damit können vom Nutzer Anforderungen, wie beispielsweise Sollwerte, die die Servicefunktionen betreffen, eingegeben werden. Weitere Eingabeeinheiten sind optische sowie elektronische Lesergeräte, die zur Nutzeridentifikation die Identifikationsdaten der potentiellen Nutzer erfassen und mit dem Berechtigungssystem und dem Schließsystem zusammenwirken. Identifikationsdaten können dabei biometrische Daten, optische und elektronische Codes sowie Passwörter sein.

Die Eingabeeinheiten, wie beispielsweise Schalter, Tastaturen und Touchscreens sind dabei innerhalb und/oder außerhalb des Raumes-im-Raum angeordnet. Touchscreens können insbesondere als Bedienterminal an der Außenseite und/oder der Innenseite des Raumes-im-Raum angeordnet sein, um die Raum-, Zugangs- und/oder Dienstfunktionen steuern zu können. Ebenso können sie als externe Eingabegeräte ausgebildet sein, die über drahtlose oder drahtgebundene Datenverbindungen, beispielsweise durch eine unmittelbare oder direkte Datenkommunikation über Datenleitungen oder Funk, mit dem Datenverarbeitungssystem verbunden sind.

Die mittelbare oder indirekte Datenkommunikation oder Datenverbindung erfolgt insbesondere über das Internet oder ein Lokales Netzwerk als LAN, WLan und mittels anderweitiger Funk-Technologien.

Damit ist eine weltweite oder zumindest unternehmensweite Eingabe von Nutzeranforderungen an das Raumsteuerungssystem mittels der Eingabeeinheiten möglich, wodurch von innerhalb und/oder beliebig außerhalb des Raumes-im-Raum eine Eingabe durch die Anwender ermöglicht wird.

Die lokale als auch weltweite Kommunikation der Eingabeeinheiten mit dem Datenverarbeitungssystem wird über entsprechende unmittelbare oder mittelbare drahtlose oder drahtgebundene Datenverbindungen ermöglicht.

Entsprechend einer weiteren Ausgestaltung der Erfindung sind die zugehörigen Anzeigeeinheiten, welche beispielsweise Bildschirme oder Anzeigefelder und/oder mobile oder stationäre Kommunikationsgeräte sind, die innerhalb und/oder außerhalb des Raumes-im-Raum angeordnet. Sie sind vorzugsweise an der Außenseite und/oder Innenseite des Raumes-im-Raum angeordnet. Die Anzeigeeinheiten können hierbei zudem beispielsweise als Display oder als LED-Anzeige ausgeführt sein.

Über unmittelbare oder mittelbare, drahtlose oder drahtgebundene Datenverbindungen der Anzeigeeinheiten mit dem Datenverarbeitungssystem ist eine ortsunabhängige Ausgabe relevanter Informationen für den Nutzer möglich.

Letztlich ist damit eine vom Aufenthaltsort des jeweiligen Nutzers unabhängige Bedienung einschließlich Informationsausgabe möglich. Die Bedienung kann sowohl innerhalb des Raumes-im-Raum als auch unmittelbar vor dem Raum sowie unabhängig von der Entfernung erfolgen. Somit sind Bedienung, Überwachung und Nutzung des Raumsteuerungssystems über einen oder mehrere externe Computer oder entsprechend geeignete Geräte möglich.

Einer Ausgestaltung der Erfindung entsprechend ist für die Raumfunktionen und/oder für die Zugangsfunktionen
und/oder für die im Raum verfügbaren Dienstfunktionen und/oder für die technischen Einrichtungen mindestens ein Stellglied vorhanden. Die Stellglieder sind jeweils für die Raumfunktionen den raumtechnischen Einrichtungen und für die Zugangsfunktionen den zugangstechnischen Einrichtungen zugeordnet. Für die im Raum verfügbaren Dienstfunktionen ist der mindestens einen bürotechnischen Einrichtung mindestens ein Stellglied zugeordnet.

Die mit entsprechenden Schnittstellen zum Datenverarbeitungssystem versehenen Stellglieder können direkt oder durch Ansteuerung entsprechender, die Servicefunktionen beeinflussender raumtechnischer, zugangstechnischer und bürotechnischer Einrichtungen über das Datenverarbeitungssystem die gewünschten Servicefunktionen realisieren.

Die Stellglieder dienen beispielsweise der Realisierung von Raumfunktionen, Zugangsfunktionen und der Realisierung von Dienstfunktionen.

Stellglieder des Raumsteuerungssystems sind beispielsweise Motoren, Ventile oder ansteuerbare Schalter, die sowohl separat wirken oder den raumtechnischen Einrichtungen für die Raumfunktionen, wie beispielsweise den Heizsystemen, Klimasystemen, Lüftungssystemen, Beleuchtungssystemen, Sichtschutzsystemen und/oder Verdunklungssystemen zugeordnet sind. Beispielsweise kann ein Antriebsmotor für ein Rollo zur Verschattung als Stellglied fungieren.

Die Stellglieder der Zugangsfunktionen sind den zugangstechnischen Einrichtungen, wie beispielsweise Schließsystemen und Berechtigungssystemen zugeordnet.
Die entsprechend ausgebildeten Stellglieder können als Schlösser mit entsprechender Schnittstelle zum Datenverarbeitungssystem weiterhin dazu dienen, den berechtigten Zugang zum Raum-im-Raum zu ermöglichen.
Ein Stellglied für die Zugangsfunktion ist ein vorzugsweise ein Schloss mit einer Schnittstelle zum Datenverarbeitungssystem, das somit eine entsprechende Öffnung der Tür bei Vorliegen einer Berechtigung ermöglicht.

Ebenso können Stellglieder den bürotechnischen Einrichtungen für die Dienstfunktionen, wie Computersystemen, Videosystemen, Audiosystemen und/oder Kommunikationssystemen und/oder Modulen zur Ansteuerung dieser Systeme zugeordnet sein. Die Stellglieder können somit sowohl als selbstständige technische Einrichtungen als auch als Teil der jeweiligen technischen Einrichtungen, beispielsweise in dem Netzteile fernbedienbar oder fernschaltbar ausgeführt sind und nur bei berechtigter oder erforderlicher Nutzung den Betrieb ermöglichen, wirksam werden.

Die Stellglieder realisieren durch ihre Ansteuerung über das Datenverarbeitungssystem letztlich die gewünschten Parameter der Raumfunktionen, Zugangsfunktionen beziehungsweise Dienstfunktionen im Raum.

Als vorteilhafte Weiterbildung der Erfindung ist mit der mindestens einen Eingabeeinheit und/oder mit der mindestens einen Anzeigeeinheit und/oder mit dem Datenverarbeitungssystem und/oder mit mindestens einer technischen Einrichtung und/oder mit mindestens einem Stellglied mindestens ein Sensor verbunden. Zudem oder alternativ ist der mindestens einen Servicefunktion mindestens ein Sensor zugeordnet. Mittels des Sensors lassen sich vorteilhaft Sollwerte für die Servicefunktion komfortabel und automatisiert erfassen. So lässt sich durch entsprechende Sensoren oder Sensorgruppen auf eine einfache Weise feststellen, ob überhaupt, welche und wieviel Nutzer anwesend sind oder ob der oder die Nutzer stehen oder sitzen und dass sich danach die Tischhöhe oder die Tischgröße verändern lassen. Vorteilhaft kann durch die automatische und unabhängige Erfassung der Anzahl der Anwesenden im Raum durch entsprechend geeignete Sensoren die Luftqualität, Luftfeuchtigkeit und Temperatur ermittelt und danach die Klimatisierung und Frischluftzufuhr eingestellt werden, ohne dass es eines aktiven Eingreifens der Nutzer bedarf. Hierfür ist der mindestens eine Sensor innerhalb oder außerhalb des Raumes-im-Raum und bei gegebenenfalls mehreren Sensoren sind diese im Bedarfsfall innerhalb und außerhalb des Raumes-im-Raum angeordnet. Somit lassen sich bereits bestimmte Servicefunktionen bereits bei Annäherung der berechtigten Person aktivieren.

Die Erfassung der Personen lässt sich vielfältig realisieren, beispielsweise über Gesichtserkennung, über RFID- oder andere Transpondersysteme oder über eine Erfassung der Bewegung bei Annäherung und über Wärmebilder.

Geht es hingegen nur um die anonyme Erkennung, dass eine oder beliebige Personen anwesend sind genügt die Erfassung körperähnlicher Konturen. Diese Erfassung von Konturen ist auch geeignet vergessene Gegenstände, wie beispielsweise Koffer, Notebooks oder andere Gegenstände zu erkennen und die Nutzer entsprechend darauf hinzuweisen. Insbesondere in öffentlichen Gebäuden oder Bereichen kann somit der von absichtlich oder versehentlich vergessenen Gegenständen gegebenenfalls ausgehenden Gefahr entgegengewirkt werden.

Entsprechend einer Weiterbildung der Erfindung ist das Raumsteuerungssystem für mehrere miteinander korrespondierende und/oder unabhängige Räume-im-Raum ausgebildet. Ein Raumsteuerungssystem kann im Zusammenwirken des Datenverarbeitungssystems mit in der Regel mehreren Eingabeeinheiten, Ausgabeeinheiten, Stellgliedern und/oder entsprechenden technischen Einrichtungen die Raumfunktionen, Zugangsfunktionen und/oder Dienstfunktionen mehrerer Räume regeln. Insbesondere bietet diese Ausgestaltung den Vorteil, dass Nutzer bei Belegung bestimmter Räume gegebenenfalls auf andere Räume des Pools verwiesen werden können, was die Buchung vereinfacht und die Nutzerzufriedenheit sowie die Auslastung der Räume erhöht.

Gemäß der Erfindung umfasst das Datenverarbeitungssystem eine Datenspeichereinrichtung. Die Datenspeichereinrichtung ermöglicht die Aufstellung eines Buchungssystems und somit eines Raumnutzungsplanes für die Zukunft mit entsprechend hinterlegten Daten. Gespeicherte Nutzungsdaten können für eine Abrechnung verwendet werden. Ebenso besteht die Möglichkeit, damit Nutzerprofile abzuspeichern.

Die Erfindungsaufgabe wird weiterhin durch die Bereitstellung von Verfahren zur Steuerung von Raumfunktionen mittels eines aus den Vorrichtungsansprüchen bekannten Raumsteuerungssystems gelöst.

Das erfindungsgemäße Verfahren sieht vor, dass Sollwerte und Daten für die Servicefunktionen mittels Nutzereingabe über mindestens eine Eingabeeinheit eingegeben oder vorgegeben werden. Die entsprechenden Sollwerte und Daten werden an das Datenverarbeitungssystem des Raumsteuerungssystems übertragen und entsprechend verarbeitet. Entsprechend den Erfordernissen und Anforderungen steuert das Datenverarbeitungssystem die den entsprechenden Servicefunktionen zugeordneten Stellglieder und/oder technischen Einrichtungen an.

Mit dem Verfahren ist es somit möglich, dass die Vorgaben der Nutzer durch die zugehörigen technischen Einrichtungen die gewünschten Servicefunktionen, wie Raumfunktionen, Zugangsfunktionen und Dienstfunktionen realisieren.
Der jeweilige Nutzer kann die Vorgänge selbst ohne Eingreifen anderer Personen unabhängig von der Zeit und dem Raum des Aufenthaltes des Nutzers vornehmen.

So können Raumfunktionen, wie insbesondere Heizung, Lüftung, Klimatisierung, Beleuchtung, Sichtschutz und/oder Verdunklung sowie gegebenenfalls eine entsprechende zeitliche Zuordnung der Sollwerte mittels Nutzereingabe über mindestens eine Eingabeeinheit vorgegeben werden. Die entsprechenden Daten des Raumsteuerungssystems werden an das Datenverarbeitungssystem übertragen und mit im Datenverarbeitungssystem hinterlegten Zeitplänen und Nutzungsprofilen abgeglichen sowie gegebenenfalls einem Zeitplan zugeordnet gespeichert werden. Entsprechend den Erfordernissen steuert das Datenverarbeitungssystem die den Funktionen zugeordneten raumtechnischen Einrichtungen bzw. Stellglieder an. Zudem ist vorgesehen, dass die Daten online an eine dem Nutzer zugeordnete Anzeigeeinheit übertragen werden. Somit ist es möglich, die Raumfunktionen beeinflussende raumtechnischen Einrichtungen so zu steuern, dass ein den Nutzervorgaben entsprechendes behagliches Raumklima durch Realisierung den Nutzervorgaben entsprechender Temperaturen, Luftfeuchtigkeit, Luftwechsel, Helligkeit und Sichtverhältnisse gegebenenfalls mit entsprechender zeitlicher Zuordnung erfolgt.

Das Verfahren ermöglicht ebenso, dass Sollwerte für Schließsysteme und Berechtigungssysteme gegebenenfalls mit einer zeitlichen Zuordnung mittels Nutzereingabe über mindestens eine Eingabeeinheit vorgegeben werden können. Die Sollwerte können insbesondere die Personen, Zeiträume und Dienstfunktionen in Raum betreffen. Diese Vorgaben werden durch Verarbeitung im Datenverarbeitungssystem und Ansteuerung der entsprechenden Stellglieder und/oder zugangstechnische Einrichtungen realisiert. Das Verfahren ermöglicht so bei Vorliegen aller Voraussetzungen den legitimierten Zugang zum jeweiligen Raum, beispielsweis durch die Entriegelung des betreffenden Türschlosses.

Ebenso ermöglicht das Verfahren die Bereitstellung und Übertragung von Sollwerten und Daten zu im Raum-im-Raum verfügbaren bürotechnischen Einrichtungen und somit die Realisierung der entsprechenden Dienstfunktionen. Entsprechend sieht das Verfahren vor, dass die eingegebenen Daten, gegebenenfalls einschließlich zeitlicher Zuordnung von einer der Eingabeeinheiten an das Datenverarbeitungssystem des Raumsteuerungssystems übertragen werden. Das Datenverarbeitungssystem leitet die Daten, gegebenenfalls nach entsprechender Datenverarbeitung, zu entsprechenden im Raum verfügbaren bürotechnischen Einrichtungen und/oder Stellgliedern für Dienstfunktionen, wie insbesondere Computersysteme, Videosysteme, Audiosysteme, Kommunikationssystem und/oder Maschinensysteme weiter. Gegebenenfalls können die Daten vom Datenverarbeitungssystem online an eine dem Nutzer zugeordnete Anzeigeeinheit übertragen werden. Dieses Verfahren kommuniziert eng mit dem in dem Datenverarbeitungssystem implementierbaren Buchungssystems. Das Verfahren ermöglicht es dem Nutzer, die im Raum verfügbaren Geräte, wie Projektoren, Großdisplay, Lautsprecher oder vorhandene Maschinen, wie beispielsweise Drucker, dreidimensionale (3D-) Drucker oder computergesteuerte Werkzeugmaschinen zu nutzen. Die Datenkommunikation ist über einen mitgebrachten, mit dem Internet oder mit dem relevanten Netzwerk verbundenen tragbaren Computer ebenso möglich, wie über einen ortsfesten Computer oder über ein anderes elektronisches mobiles Endgerät. Dementsprechend ist es beispielsweise möglich, eine Videokonferenz durchzuführen.

Einer vorteilhaften Ausgestaltung des Verfahrens entsprechend kommuniziert das Datenverarbeitungssystem mit einer am Raum angeordneten Eingabeeinheit, wobei die entsprechend ausgebildete Eingabeeinheit der Identifikation des Nutzers dient und dazu die entsprechende, personenbezogene Daten erfasst. Das Datenverarbeitungssystem ermittelt durch Abgleich mit vorhandenen Daten die personenbezogenen Berechtigungen, insbesondere für den Zugang zum entsprechenden Raum. Auf diese Weise kann der jeweilige Nutzer identifiziert werden. Die entsprechenden Identifikationsdaten können beispielsweise durch Eingabe eines den Nutzern zugesandten Kennwortes, eine Iriserkennung, eine Fingerabdruckerkennung, eine Identifikationskarte mit beispielsweise Strichcode oder QR-Code oder einen mitgeführten RFID-Chip von der entsprechenden Eingabeeinheit erfasst werden. Bei Übereinstimmung mit im Datenverarbeitungssystem abgespeicherten Identifikationsdaten ermöglicht auf Anforderung das Schließsystem sowie das Berechtigungssystem durch Ansteuerung der entsprechenden Stellglieder den Zugang zum Raum-im-Raum und/oder zu den freigegebenen Raumfunktionen oder Dienstfunktionen. Einer Ausgestaltung der Erfindung entsprechend ist vorgesehen, dass die Daten vom Datenverarbeitungssystem an eine Anzeigeeinheit übertragen werden. Zudem kann vorgesehen sein, dass die Daten direkt an eine dem Nutzer zugeordnete Anzeigeeinheit übertragen werden können. Damit ist sowohl eine Eingabekontrolle als auch eine Kontrolle der Funktionen des Raumsteuerungssystems möglich. Die Anzeigeeinheit lässt sich in diesem Fall beispielsweise auf elektronisches mobiles Endgerät übertragen, dessen Bildschirm dann die Anzeigeeinheit ist.

Einer vorteilhaften Ausgestaltung des erfindungsgemäßen Verfahrens entsprechend legt das Datenverarbeitungssystem durch Eingabe über eine der Eingabeeinheiten ein editierbares Nutzerprofil an und speichert dieses ab. Das Nutzerprofil ermöglicht es beispielsweise, Präferenzen des Nutzers hinsichtlich des Raumklimas abzulegen. Vorzugsweise ist damit die Vergabe von Passwörtern zur Identifikation verknüpft. Das Nutzerprofil verkürzt für den Nutzer die Eingabedauer und/oder Konfigurierung des Raumsteuerungssystems. Weiterhin kann das Berechtigungssystem des Datenverarbeitungssystems auf die Daten des Nutzerprofils zugreifen.

Der Erfindung entsprechend ist in das

Datenverarbeitungssystem ein Buchungssystem implementiert, das auf dem zugehörigen Server angelegt ist. Das Buchungssystem umfasst einen Zeitplan und ermöglicht eine schnelle und übersichtliche Zuordnung der Nutzer zu den Räumen. Durch eine in das Datenverarbeitungssystem implementierte Zuordnungstabelle kann über den Zeitplan eine zeitliche Zuordnung der Daten erfolgen. Es wird gegebenenfalls ein Abgleich mit Anforderungen anderer Nutzer vorgenommen. Somit lassen sich durch ein solches Buchungssystem Nutzungskonflikte vermeiden. Das Buchungssystem kann zudem so ausgeführt sein, dass bei Nichtverfügbarkeit dem Nutzer Alternativtermine und/oder Alternativräume vorgeschlagen werden.

Bei Raumverfügbarkeit und Berechtigung des Nutzers kann eine Bestätigung der Buchung gegenüber dem Nutzer erfolgen. Damit ermöglicht das Verfahren den Zugang zum Raum-im-Raum durch Vergabe in der Regel zeitlich zugeordneter Berechtigungen zu steuern. Die Berechtigungen ermöglichen insbesondere das Öffnen der Schlösser und die Freigabe von der Berechtigung zugeordneten technischen Einrichtungen im Raum.
So können beispielsweise zu der entsprechenden Zeit, gegebenenfalls mit technisch bedingtem Vorlauf, dem Nutzer die gewünschten Raumfunktionen bereitgestellt werden. Mit dem Buchungssystem wird die Nutzerfreundlichkeit des Raumsteuerungssystems verbessert.

Gemäß einer weiteren Ausgestaltung der Erfindung ist vorgesehen, dass das Datenverarbeitungssystem die Servicefunktionen des Raumsteuerungssystems überwacht und Statusdaten an eine der Anzeigeeinheiten übertragen werden. Damit können Störungen frühzeitig erkannt und behoben werden. Ebenso ist auf dies Weise eine Abrechnung der Raum-im-Raum Nutzung möglich.

Es ist jedoch für den vereinfachten Betrieb vorgesehen, dass Eingabeeinheiten die Stellglieder oder die jeweiligen Servicefunktionen direkt auslösen und beeinflussen, damit ist einerseits ein Notfallbetrieb möglich andererseits eine Backupmöglichkeit bei Ausfall Datenverarbeitungssystem gegeben. Zweckmäßig ist es hierbei, dass die Stellglieder sowie die jeweiligen Servicefunktionen dennoch vom Datenverarbeitungssystem überwacht oder nach einem gegebenenfalls erforderlichen Neustart oder einer Wiederinbetriebnahme abgefragt werden, um die ordnungsgemäße Funktion des Raum-in-Raum zu gewährleisten.

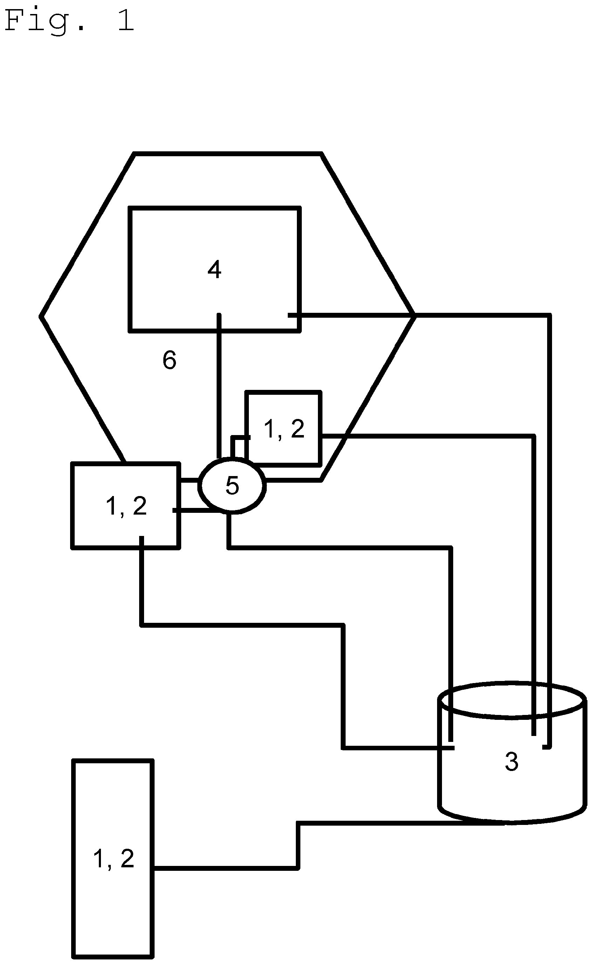

Die Erfindung wird anhand der Zeichnung als schematische Darstellung einer Ausführung des Raumsteuerungssystems dargestellt und im Folgenden näher beschrieben.

Das Raumsteuerungssystem regelt unterschiedliche raumbezogene Servicefunktionen, welchen Raumfunktionen, Zugangsfunktionen und Dienstfunktionen zugeordnet werden können, für einen Raum-im-Raum 6.

Das Raumsteuerungssystem besteht aus mindestens einer Eingabeeinheit 1, die dem Nutzer dazu dient, die Daten seiner Anforderungen, beispielsweise Sollwerte und deren zeitliche Zuordnung, an das Raumsteuerungssystem einzugeben. Die Eingabeeinheit 1 ist hier beispielsweise ein tragbarer Computer 1, 2 oder ein anderes mobiles Kommunikationsgerät und im engeren Sinne die Tastatur beziehungsweise der Touchscreen des tragbaren Computers 1, 2 oder Smartphones oder eines Bedienbildschirms oder eines Bedienterminals innerhalb und außerhalb des Raumes-im-Raum 6, da diese durch Berührungsempfindlichkeit dazu geeignet sind Eingaben zu realisieren. Mit der Eingabeeinheit 1 werden Nutzeranforderungen für den betreffenden Raum-im-Raum 6 eingegeben und damit vorgegeben. Diese Nutzeranforderungen betreffen Servicefunktionen, die durch im Raum-im-Raum 6 verfügbare technische Einrichtungen 4 realisiert werden. Die Servicefunktionen können dabei den Raumfunktionen, den Zugangsfunktionen und den Dienstfunktionen zugeordnet sein. Die technischen Einrichtungen 4, die die Aufgaben der Raumfunktion realisieren, werden entsprechend als raumtechnische Einrichtungen 4 bezeichnet. Entsprechend realisieren die zugangstechnischen Einrichtungen 4 die Funktionen des Zugangssystems und bürotechnischen Einrichtungen 4 die Dienstfunktionen.

Die Raumfunktionen sind insbesondere Heizung, Lüftung, Klimatisierung, Beleuchtung, Sichtschutz und/oder Verdunklung sowie gegebenenfalls deren entsprechende zeitliche Zuordnung.
Diese Funktionen haben insbesondere die Aufgabe die Behaglichkeit im Raum 6 zu gewährleisten. Darüber hinaus können sie durch zeitweise Absenkung der Raumtemperatur und/oder Abschaltung des Lichts beziehungsweise der Heizung oder Klimatisierung zur Energieeinsparung beitragen.

Eine weitere Raumfunktion ist die Zugangsfunktion, die vorzugsweise eine Buchungsfunktion umfasst und mit einem Berechtigungssystem und einem Schließsystem zusammenwirkt. Entsprechende Nutzer und oder ein Berechtigter, wie beispielsweise der Verwalter des Raumes-im-Raum 6, haben hierbei die Möglichkeit, über die Eingabeeinheit 1 Anforderungen und Sollwerte für die Zugangsfunktion ausführende Schließsysteme und Berechtigungsfunktionen mit einer zeitlichen Zuordnung einzugeben. Diese Nutzung schließt eine Buchungsfunktion zur Reservierung des Raumes-im-Raum 6 und zugehöriger Dienstfunktionen ein. Eine und/oder mehrere spezielle Eingabeeinheiten 1 können dabei auch dazu ausgebildet sein, den Nutzer durch Eingabe von Passwörtern, Erkennung biometrischer Merkmale und/oder Auslesen von optischen und elektronischen Codes zu identifizieren und somit gegebenenfalls zu legitimieren. Diese sind vorzugsweise am Zutritt zum Raum-im-Raum 6, beispielsweise neben der Tür, platziert.

Die Eingabeeinheiten 1 können auch so ausgebildet sein, dass sie Daten über Funkstandards, wie beispielsweise NFC oder Transponder (z.B. RFID) senden und gegebenenfalls empfangen können.

Weiterhin ist über eine der Eingabeeinheiten 1 eine Eingabe beziehungsweise Einspielung von Daten möglich, die eine Nutzung entsprechender im Raum-im-Raum 6 angeordneter bürotechnischer Einrichtungen 4 zur Realisierung von Dienstfunktionen ermöglichen. Die Eingabeeinheiten 1 können sowohl im Raum-im-Raum 6, außerhalb des Raumes-im-Raum 6 als auch über das Internet angeordnet sein. Somit ist die Eingabe raumunabhängig möglich. Die entsprechenden Dienstfunktionen werden durch bürotechnische Einrichtungen 4 wie beispielsweise Computersysteme, Videosysteme, Audiosysteme und/oder Maschinensysteme unter Verwendung dieser Daten bereitgestellt. Beispielsweise können so auf einem Datenträger enthaltene Daten mit einem Projektor angezeigt oder auf einem Drucker ausgedruckt werden.

Weiterhin umfasst das Raumsteuerungssystem Anzeigeneinheiten 2. Hier dient als Anzeigeneinheit 2 ein Bildschirm beispielsweise eines tragbaren Computers 1, 2. Somit realisieren hier die tragbaren Computer 1, 2 sowohl die Eingabeeinheit 1 als auch die Anzeigeeinheit 2. Die Anzeigeeinheit 2 unterstützt somit durch Anzeige der Daten die Bedienung des Raumsteuerungssystems. Ebenso dient die Anzeigeeinheit 2 auch als Statusanzeige, bezüglich beispielsweise der Raumtemperatur der Luftfeuchtigkeit und der Nutzungsdauer. Als Anzeigeeinheiten 2 können dabei beispielsweise auch Wände und Glasflächen für Anzeigen, beispielsweise durch entsprechend ausgebildete bürotechnische Einrichtungen 4, genutzt werden. Dabei können die Wände und Glasflächen diese Anzeigeeinheiten 2 bereits enthalten oder den Anzeigen als Projektionsfläche dienen.

Weiterhin dienen die für die Eingabeeinheiten 1 vorgesehenen Bedienbildschirme oder Bedienterminals innerhalb und außerhalb des Raumes-im-Raum 6 auch als Anzeigeeinheiten 2.

Die über die Eingabeeinheiten 1 eingegebenen Daten werden an das Datenverarbeitungssystem 3 des Raumsteuerungssystems weitergeleitet. Das Datenverarbeitungssystem 3 umfasst hardwareseitig zumindest einen mit einem Netzwerk, wie vorzugsweise einem Unternehmensnetzwerk oder dem Internet, verbundenen Server und eine Steuerungssoftware. Das Datenverarbeitungssystem 3 verarbeitet die eingegebenen Daten und speichert diese gegebenenfalls ab. Beispielsweise wird eine zeitliche Zuordnungstabelle erstellt. Zum festgelegten Zeitpunkt und gegebenenfalls mit einer zweckmäßigen Vorlaufzeit werden die entsprechenden Stellglieder 5 und/oder raumtechnischen Einrichtungen 4 für Heizung, Lüftung, Licht und/oder die zugangstechnischen Einrichtungen angesteuert. Ebenso können durch das Datenverarbeitungssystem 3 entsprechende Daten an im Raum-im-Raum 6 vorhandene bürotechnischen Einrichtungen 4 zur Ausführung von Dienstfunktionen, wie beispielsweise Projektoren, separate Computer oder Drucker, weitergeleitet und diese somit genutzt werden. Bei bürotechnischen Einrichtungen 4 mit einer Vorlaufzeit oder Hochlaufzeit lassen sich diese bereits rechtzeitig vor Nutzungsaufnahme einschalten bzw. starten.

Darüber hinaus ist natürlich weiterhin der direkte Zugriff auf Raumfunktionen und Dienstfunktionen ohne Einbeziehung des Datenverarbeitungssystems 3 durch Betätigung entsprechender Stellglieder 5, wie Schalter und Stellventile und durch Nutzung von Schnittstellen an entsprechenden raumtechnischen Einrichtungen 4 beziehungsweise bürotechnischen Einrichtungen 4 möglich.

In einem Ausführungsbeispiel ist innerhalb des Raumes-im-Raum 6 ein Sensor vorhanden, welche neben Temperatur auch die Luftfeuchtigkeit und den Anteil an Kohlendioxid im Raum-im-Raum ermittelt und danach die Klimatisierung und Frischluftzufuhr eingestellt. Der Sensor erfasst zudem die Anzahl der anwesenden Personen mittels Wärmebilderfassung. Über einen Bewegungsmelder und Lichtsensor außerhalb des Raumes im-Raum 6 wird zudem erkannt, ob im Raum oder Bereich außerhalb des Raumes-im-Raum 6 Personen anwesend sind, so dass der Raum zu Repräsentationszwecken erleuchtet ist oder die Scheiben animiert werden, während er bei der Abwesenheit von Personen in einen Ruhemodus versetzt wird, um Energie zu sparen.

Der Sensor innerhalb des Raumes-im-Raum 6 ist mit der Eingabeeinheit 1 innerhalb des Raumes-im-Raum 6 verbunden. Entsprechend der Erfassung des Sensors im Raum-im-Raum 6 wird über das Datenverarbeitungssystem 3 die raumtechnische Einrichtung 4 für die Veränderung der Raumfunktion zur Lüftung, Heizung oder Kühlung angesteuert. Über die Eingabeeinheit 1 werden die erfassten Parameter an das Datenverarbeitungssystem 3 und an die Ausgabeeinheit 2 innerhalb des Raum-im-Raum 6 übermittelt. Eingabeeinheit 1 und Ausgabeeinheit 2 sind hier ein an der Innerwand des Raum-im-Raum 6 angeordneter Touchscreen.

Der Sensor außerhalb des Raumes ist direkt mit dem Datenverarbeitungssystem 3 verbunden. Über das Datenverarbeitungssystem 3 werden neben den raumtechnische Einrichtungen 4 für Licht und Heizung oder Kühlung sowie Lüftung auch die zugangstechnische Einrichtung 4 angesteuert, welche im energiesparenden Betrieb erst bei Annäherung in Bereitschaft gehen brauchen.

Für die Bereitstellung von Verbrauchsmaterialen am oder im Raum-im-Raum 6 sind als Schränke beispielweise Schließfächer vorhanden (nicht dargestellt), welche über das Buchungssystem oder Berechtigungssystem sowie über die Zugangsfunktion freigeschaltete werden. In den Schließfächern werden Getränke und Snacks sowie Büromaterialien vorgehalten und sind ergänzende Bediengeräte oder Eingabegeräte 1 zu den raumtechnischen Einrichten 4 und bürotechnische Einrichtung 4 hinterlegt. Es ist vorgesehen, dass die Verbrauchsmaterialen sowie die Bediengeräte oder Eingabegeräte 1 bei Entnahme erfasst über Sensoren und Kameras werden, so dass einerseits rechtzeitig ein Auffüllen und anderseits eine Abrechnung erfolgen kann und dass zudem überwacht werden kann, dass die Bediengeräte oder Eingabegeräte 1 nach Benutzung wieder deponiert werden und nicht liegengelassen oder gar mitgenommen werden. Die Erfassung und Abrechnung erfolgen über das Buchungssystem das Raumsteuerungssystem 3.

Der Einsatz des Systems zur Steuerung verschiedener technischer Einrichtungen zur Realisierung unterschiedlicher Funktionen in einem Raum als Raum-im-Raum 6 erlaubt vielfältige Anwendungen im kommerziellen Büroumfeld sowie in öffentlich zugänglichen Gebäuden. Dazu gehören neben Räumen-im-Raum für Besprechungen oder für Büros auch Räume-im-Raum 6 als Ruheraum beispielsweise auf Flughäfen oder als geschützter Bereich in industriellen Umfeld. Die Erfindung lässt sich im industriellen Umfeld einsetzen und umsetzten und anwenden.

### Bezugszeichenliste

- 1 -: Eingabeeinheit, tragbarer Computer
- 2 -: Anzeigeneinheit, tragbarer Computer
- 3 -: Datenverarbeitungssystem
- 4 -: technische Einrichtung, raumtechnische Einrichtung, bürotechnische Einrichtung,
- 5 -: Stellglied
- 6 -: Raum-im-Raum, Raum

## Patentansprüche

1. Raumsteuerungssystem für einen Raum-im-Raum (6) als abgegrenzten räumlichen Bereich innerhalb bestehender Räume und als frei stehende, in sich abgeschlossene und unabhängige Raumeinheit in großen Räumen, umfassend mindestens eine Eingabeeinheit (1), mindestens eine Anzeigeeinheit (2) und ein mit der Eingabeeinheit (I) und der Anzeigeeinheit (2) zusammenwirkendes Datenverarbeitungssystem (3), wobei durch das Datenverarbeitungssystem (3) mindestens eine technische Einrichtung (4) ansteuerbar ist und durch die mindestens eine technische Einrichtung (4) mindestens eine Servicefunktion, realisierbar ist, wobei das Datenverarbeitungssystem eine Datenspeichereinrichtung für die Aufstellung eines Buchungssystems und somit eines Raumnutzungsplanes umfasst, wobei das Buchungssystem einen Zeitplan umfasst, wobei das Buchungssystem mit einer Zugangsfunktion korrespondiert.

2. Raumsteuerungssystem nach Anspruch 1
**dadurch gekennzeichnet,**
**dass** die Servicefunktion eine Raumfunktion, eine Zugangsfunktion und/oder eine im Raum-im-Raum (6) verfügbare Dienstfunktion ist.

3. Raumsteuerungssystem nach Anspruch 1 oder 2,
**dadurch gekennzeichnet,**
**dass** die Eingabeeinheiten (1) und/oder Anzeigeeinheiten (2) innerhalb und/oder außerhalb des Raumes-im-Raum (6) angeordnet sind, und/oder über drahtlose oder drahtgebundene Datenverbindungen unmittelbar oder mittelbar mit dem Datenverarbeitungssystem (3) verbunden sind.

4. Raumsteuerungssystem nach einem der Ansprüche 1 bis 3,
**dadurch gekennzeichnet,**
**dass** die Eingabeeinheiten (1) und/oder Anzeigeeinheiten (2) miteinander verbunden sind.

5. Raumsteuerungssystem nach einem der Ansprüche 1 bis 4,
**dadurch gekennzeichnet,**
**dass** für die Realisierung der Raumfunktionen und/oder für die Realisierung der Zugangsfunktionen und/oder für die Realisierung der im Raum-im-Raum (6) verfügbaren Dienstfunktionen an den jeweiligen die technischen Einrichtungen mindestens ein Stellglied (3) vorhanden ist.

6. Raumsteuerungssystem nach einem der Ansprüche 1 bis 5,
**dadurch gekennzeichnet,**
**dass** mit der mindestens einen Eingabeeinheit (1) und/oder mit der mindestens einen Anzeigeeinheit (2) und/oder mit dem Datenverarbeitungssystem (3) und/oder mit der mindestens einen technische Einrichtung (4) und/oder mit dem mindestens einen Stellglied (3) mindestens ein Sensor verbunden ist und/oder dass der mindestens einen Servicefunktion mindestens ein Sensor zugeordnet ist, wobei der mindestens eine Sensor innerhalb und/oder außerhalb des Raumes-im-Raum (6) angeordnet ist.

7. Raumsteuerungssystem nach einem der Ansprüche 1 bis 6,
**dadurch gekennzeichnet,**
**dass** das Raumsteuerungssystem für mehrere miteinander korrespondierende und/oder unabhängige Räume (6) ausgebildet ist.

8. Raumsteuerungssystem nach einem der Ansprüche 1 bis 7,
**dadurch gekennzeichnet,**
**dass** das Datenverarbeitungssystem (3) eine Datenspeichereinrichtung umfasst.

9. Verfahren zur Steuerung von Servicefunktionen, wie Raumfunktionen, Zugangsfunktionen und Dienstfunktionen für einen Raum-im-Raum (6) mittels eines Raumsteuerungssystems nach einem der Ansprüche 1 bis 8,
**dadurch gekennzeichnet,**
- **dass** Sollwerte und Daten für die Servicefunktionen für die Raum-im-Raum-Nutzung mittels Nutzereingabe über mindestens eine Eingabeeinheit (1) und/oder einen Sensor eingegeben oder vorgegeben werden,
- **dass** die entsprechenden Sollwerte und Daten an das Buchungssystem im Datenverarbeitungssystem (3) des Raumsteuerungssystems übertragen werden,
- **dass** das Datenverarbeitungssystem (3) die Sollwerte und Daten (gegebenenfalls) verarbeitet und
- **dass** die die Servicefunktionen realisierenden Stellglieder (5) und/oder technischen Einrichtungen (4) zumindest für die Zugangsfunktion über das Datenverarbeitungssystem (3) nach den Erfordernissen angesteuert werden.

10. Verfahren nach Anspruch 9,
**dadurch gekennzeichnet,**
**dass** die Identifikationsdaten der Nutzer mittels einer außerhalb und/oder innerhalb des Raumes-im-Raum (6) angeordneten Eingabeeinheit (1) für das Berechtigungssystem erfasst werden,
**dass** die entsprechenden Identifikationsdaten an das Datenverarbeitungssystem (3) des Raumsteuerungssystems übertragen werden und dass das Datenverarbeitungssystem (3) durch Abgleich mit vorhandenen Daten Berechtigungen ermittelt und gemäß der ermittelten Berechtigungen die entsprechenden Stellglieder (5) und/oder die raumtechnischen Einrichtungen (4) für die Raumfunktionen, die zugangstechnischen Einrichtungen (4) für die Schließfunktionen und/oder die bürotechnischen Einrichtungen (4) für die Dienstfunktionen ansteuert.

11. Verfahren zur Steuerung von Raumfunktionen nach einem der Ansprüche 9 oder 10,
**dadurch gekennzeichnet,**
**dass** die Sollwerte und Daten vom Datenverarbeitungssystem (3) an mindestens eine Anzeigeeinheit (2) übertragen werden.

12. Verfahren zur Steuerung von Raumfunktionen nach einem der Ansprüche 9 bis 11,
**dadurch gekennzeichnet,**
**dass** durch Eingabe über eine der Eingabeeinheiten (1) das Datenverarbeitungssystem (3) aus nutzerspezifischen Sollwerten ein editierbares Nutzerprofil anlegt und speichert und und/oder technischen Einrichtungen (4) entsprechend dem zugeordneten Nutzerprofil ansteuert.

13. Verfahren zur Steuerung von Raumfunktionen nach einem der Ansprüche 9 bis 12,
**dadurch gekennzeichnet,**
**dass** das Datenverarbeitungssystem (3) die eingegebenen Sollwerte und/oder Daten mit bestehenden Zeitplänen und Nutzungsprofilen abgleicht und gegebenenfalls einem Zeitplan zuordnet und speichert und die die Servicefunktionen realisierenden Stellglieder (5) und/oder technischen Einrichtungen (4) entsprechend dem zugeordneten Zeitplan ansteuert.

14. Verfahren zur Steuerung von Raumfunktionen nach einem der Ansprüche 9 bis 13,
**dadurch gekennzeichnet,**
**dass** das Datenverarbeitungssystem (3) die Servicefunktionen des Raumsteuerungssystems überwacht und Statusdaten an mindestens eine der Anzeigeeinheiten (2) übertragen werden.

## Claims

1. Room control system for a room-in-room (6) as a delimited spatial area within existing rooms and as a free-standing, self-contained and independent spatial unit in large rooms, comprising at least one input unit (1), at least one display unit (2) and a data processing system (3) interacting with the input unit (1) and the display unit (2), wherein at least one technical device (4) can be controlled by the data processing system (3) and at least one service function can be realized by the at least one technical device (4), wherein the data processing system is provided with a data storage device which comprises the setting up of a booking system and thus a space utilization plan, wherein the booking system comprises a time schedule, wherein the booking system corresponds to an access function.

2. Room control system, according to claim 1
**characterised in that**,
the service function constitutes a room function, and access function and/or a service function available in the room-in-room (6).

3. Room control system, according to claim 1 or 2,
**characterised in that**
the input units (1) and/or display units (2) are arranged inside and/or outside the room-in-room (6) and/or connected with the data processing system (3) directly or indirectly via wireless or wired data connections.

4. Room control system, according to one of the claims 1 to 3,
**characterised in that**
the input units (1) and/or display units (2) are connected with each other.

5. Room control system, according to one of the claims 1 to 4,
**characterised in that**
for the realisation of the room function and/or the realisation of the access function and/or the realisation of the service functions available in the room-in-room (6) at least one final control element (3) is available at the respective technical devices.

6. Room control system, according to one of the claims 1 to 5,
**characterised in that**
That with the at least one input unit (1) and/or at least one display unit (2) and/or the data processing system (3) and/or the at least one technical device (4) and/or the at least one final control element (3) at least one sensor is connected where the at least one service function is allocated to at least one sensor where the at least one sensor is located inside and/or outside the room-in-room (6).

7. Room control system, according to one of the claims 1 to 6,
**characterised in that**
the room control system is designed for several corresponding and/or independent rooms (6).

8. Room control system, according to one of the claims 1 to 7,
**characterised in that**
The data processing system (3) includes a data storage facility.

9. Procedure for the control of service functions, such as room functions, access functions and service functions for a room-in-room (6) via a room control system according to one of the claims 1 to 8,
**characterised in that**
- **in that** target values and data for the service functions for room-in-room use are entered or specified by means of user input via at least one input unit (1) and/or one sensor,
- the corresponding target values and data is transferred to the booking system in the data processing system (3) of the room control system,
- the data processing system (3) process the target values and data (if applicable) and
- the final control elements (5) and/or technical devices (4) realising the service function at least for the access function are selected via the data processing system (3) as required.

10. Method according to claim 9,
**characterised in that**
the identification data of the users is recorded via an input unit (1) for the authorisation system located inside and/or outside the room-in-room (6).
the respective identification data is transferred to the data processing system (3) of the room control system and that the data processing system (3) by comparison with existing data determines authorisations and according to the determined authorisations selects final control elements (5) and/or room equipment (4) for the room function, the access control devices (4) for the locking function and/or the office equipment (4) for the service functions.

11. Procedure for the control of room functions according to one of the claims 9 or 10,
**characterised in that**
the target values and data is transmitted by the data processing system (3) to at least one display unit (2).

12. Procedure for the control of room functions according to one of the claims 9 to 11,
**characterised in that**
by entering via one of the input units (1) the data processing system (3) generates and stores an editable user profile from user-specific target values and/or selects technical devices (4) according to the allocated user profile.

13. Procedure for the control of room functions according to one of the claims 9 to 12,
**characterised in that**
the data processing system (3) compares the entered target values and/or data with existing schedules and utilisation profiles and, if applicable, allocates them to a schedule and saves them and selects the final control elements (5) that realise the service functions and/or technical devices (4) in accordance with the allocated schedule.

14. Procedure for the control of room functions according to one of the claims 9 to 13,
**characterised in that**
the data processing system (3) monitors the service functions of the room control system and status data is transferred to at least one of the display units (2).

## Revendications

1. Système de contrôle des locaux pour une pièce dans une pièce (6) en tant que zone spatiale délimitée au sein des pièces existantes et en tant que unité spatiale autonome, fermée et indépendante dans de grandes pièces, comprenant au moins une unité d'entrée (1), une unité d'affichage (2) et un système de traitement de données (3) coopérant avec l'unité d'entrée (1) et l'unité d'affichage (2), dans lequel au moins un dispositif technique (4) peut être commandé par le système de traitement des données (3) et au moins une fonction de service peut être réalisée par au moins un dispositif technique (4), dans lequel le système de traitement des données est muni d'un dispositif de stockage de données qui comprend la mise en place d'un système de réservation et donc d'un plan d'utilisation des espaces, dans lequel le système de réservation comprend un calendrier, dans lequel le système de réservation correspond à une fonction d'accès.

2. Système de contrôle des locaux selon la revendication 1
**caractérisé en ce que**,
la fonction de service est une fonction de locaux, une fonction d'accès et/ou une fonction de service disponible pour une pièce dans une pièce (6).

3. Système de contrôle des locaux selon la revendication 1 ou 2,
**caractérisé en ce que**
**en ce que** les unités de saisie (1) et/ou les unités d'affichage (2) sont disposées à l'intérieur et/ou à l'extérieur de la pièce (6), et/ou sont reliées directement ou indirectement au système de traitement des données (3) par des connexions de données sans fil ou câblées.

4. Système de contrôle des locaux selon les revendications 1 à 3,
**caractérisé en ce que**
les unités d'entrée (1) et/ou les unités d'affichage (2) sont reliées entre elles.

5. Système de contrôle des locaux selon les revendications 1 à 4,
**caractérisé en ce que**
au moins un actionneur (3) est disponible dans les installations techniques respectives pour la mise en œuvre des fonctions de locaux et/ou pour la mise en œuvre des fonctions d'accès et/ou pour la mise en œuvre des fonctions de service disponibles au sein de la pièce dans la pièce (6).

6. Système de contrôle de locaux selon les revendications 1 à 5,
**caractérisé en ce que**
au moins un capteur est relié à au moins une unité d'entrée (1) et/ou à au moins une unité d'affichage (2) et/ou au système de traitement de données (3) et/ou à au moins un dispositif technique (4) et/ou à au moins un actionneur (3) et/ou **en ce que** au moins un capteur est associé à au moins une fonction de service, au moins un capteur étant disposé à l'intérieur et/ou à l'extérieur de la pièce dans la pièce (6).

7. Système de contrôle des locaux selon les revendications 1 à 6,
**caractérisé en ce que**
le système de contrôle des locaux est conçu pour plusieurs locaux mutuellement correspondants et/ou indépendants (6).

8. Système de contrôle des locaux selon les revendications 1 à 7,
**caractérisé en ce que**
le système de traitement des données (3) comporte un dispositif de stockage des données.

9. Procédé de contrôle des fonctions de service, telles que les fonctions de locaux, les fonctions d'accès et les fonctions de service pour une pièce dans une pièce (6) au moyen d'un système de contrôle des locaux selon l'une des revendications 1 à 8,
**caractérisé en ce que**
- les valeurs de consigne et les données des fonctions de service pour l'utilisation d'une pièce dans une pièce sont saisies ou spécifiées au moyen d'une entrée utilisateur via au moins une unité d'entrée (1) et/ou un capteur,
- les valeurs de consigne et les données correspondantes sont transmises au système de réservation dans le système de traitement des données (3) du système de contrôle des locaux,
- le système de traitement des données (3) traite les valeurs nominales et les données (le cas échéant) et
- les actionneurs (5) et/ou les dispositifs techniques (4) qui mettent en œuvre les fonctions de service sont commandés en fonction des besoins par le système de traitement des données (3), au moins pour la fonction d'accès.

10. Procédé selon la revendication 9,
**caractérisé en ce que**
les données d'identification des utilisateurs sont enregistrées pour le système d'autorisation au moyen d'une unité d'entrée (1) qui est disposée à l'extérieur et/ou à l'intérieur du local (6),
les données d'identification correspondantes sont transmises au système de traitement des données (3) du système de contrôle des locaux et le système de traitement des données (3) détermine les autorisations par comparaison avec les données existantes et commande les actionneurs correspondants (5) et/ou les dispositifs techniques des locaux (4) pour les fonctions des locaux, pour les dispositifs techniques d'accès (4), pour les fonctions de verrouillage et/ou les dispositifs techniques de bureau (4) pour les fonctions de service conformément aux autorisations déterminées.

11. Procédé de contrôle des fonctions des locaux selon l'une des revendications 9 ou 10,
**caractérisé en ce que**
les valeurs de consigne et les données sont transmises du système de traitement des données (3) à au moins une unité d'affichage (2).

12. Procédé de contrôle des fonctions des locaux selon l'une des revendications 9 à 11,
**caractérisé en ce que**
par la saisie via une des unités de saisie (1), le système de traitement des données (3) crée et enregistre un profil utilisateur modifiable à partir de valeurs de consigne spécifiques à l'utilisateur et/ou contrôle des dispositifs techniques (4) conformément au profil utilisateur attribué.

13. Procédé de contrôle des fonctions des locaux selon l'une des revendications 9 à 12,
**caractérisé en ce que**
le système de traitement des données (3) compare les valeurs de consigne et/ou les données saisies avec les calendriers et les profils d'utilisation existants et, le cas échéant, les affecte et les enregistre à un calendrier et contrôle les actionneurs (5) et/ou les dispositifs techniques (4) qui mettent en œuvre les fonctions de service conformément au calendrier attribué.

14. Procédé de contrôle des fonctions des locaux selon l'une des revendications 9 à 13,
**caractérisé en ce que**
le système de traitement des données (3) surveille les fonctions de service du système de contrôle des locaux et que les données d'état sont transmises à au moins une des unités d'affichage (2).
